# EUROPEAN PATENT SPECIFICATION

(11) **EP 3 712 515 B1**
(45) Date of publication and mention of the grant of the patent: **22.05.2024**
(21) Application number: 19798152.5
(22) Date of filing: 22.10.2019
(51) Int. Cl.: F24F 1/0073, F24F 13/28, F24F 11/89

(54) **FILTER MESH RAIL MODULE, CLEANING COMPONENT, AIR CONDITIONER INDOOR UNIT, AND AIR CONDITIONER**
FILTERGITTERSCHIENENMODUL, REINIGUNGSKOMPONENTE, KLIMAANLAGENINNENRAUMEINHEIT UND KLIMAANLAGE
MODULE DE RAIL DE MAILLE FILTRANTE, ÉLÉMENT DE NETTOYAGE, SECTION INTÉRIEURE DE CLIMATISEUR ET CLIMATISEUR

(30) Priority: 31.01.2019 CN 201920179257 U
(43) Date of publication of application: 23.09.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: LU, Gen, Foshan Guangdong 528311 (CN); SUN, Zecheng, Foshan Guangdong 528311 (CN); PI, Shuyang, Foshan Guangdong 528311 (CN); ZHANG, Huajun, Foshan Guangdong 528311 (CN)
(74) Representative: Whitlock, Holly Elizabeth Ann
(86) International application number: PCT/CN2019/112426
(87) International publication number: WO 2020/155674

(56) References cited:
- WO-A1-2012/096121
- CN-A- 103 299 135
- CN-A- 107 461 806
- CN-U- 205 641 447
- CN-U- 206 959 170
- CN-U- 207 688 395
- CN-U- 207 688 395
- JP-A- 2010 210 191
- JP-A- 2012 102 982
- JP-A- 2012 102 984
- JP-A- 2016 118 358

## Description

### TECHNICAL FIELD

The present invention relates to the technical field of air conditioner, and in particular, to an indoor unit of an air conditioner, and an air conditioner.

### BACKGROUND

In order to clean the filter screen, it is necessary to provide a cleaning module in the indoor unit of the air conditioner. The cleaning module is configured to drive the filter screen to move and clean the filter screen simultaneously. However, the rail required for the movement of the filter screen needs to be cooperated with the face frame, that is, the function of the filter screen can be detected after the indoor unit of the air conditioner is assembled.

The statements herein merely provide background information related to the present disclosure and do not necessarily constitute prior art.

CN206959170U relates to air conditioning indoor unit and an air conditioner having the air conditioning indoor unit.

### SUMMARY

An objective of the present invention is to provide an indoor unit of an air conditioner, and an air conditioner, which aims to solve the problem of inconvenient detection on the function of the filter screen.

In order to achieve the above objective, the present invention provides an indoor unit as set out in claim 1. Other aspects of the invention can be found in the dependent claims.

In the technical solutions of the present invention, the filter screen rail module can be separated into separate components from the face frame. The filter screen rail module is provided with a rail in which the filter screen moves. Therefore, before the indoor unit of the air conditioner is assembled, the filter screen rail module can be installed with the cleaning module as a separate functional component for detecting the function of the filter screen.

### BRIEF DESCRIPTION OF THE DRAWINGS

In order to more clearly illustrate the embodiments of the present invention, the drawings used in the embodiments will be briefly described below. It is appreciated that, the drawings in the following description are exemplary embodiments of the present invention which is defined in the claims. It will be apparent to those skilled in the art that other figures can be obtained from the structures illustrated in the drawings without the inventive effort as long as within the scope of the claims.
FIG. 1 is a schematic structural view of a filter screen rail module for an embodiment of the present invention;
FIG. 2 is an enlarged view of the dotted line in FIG 1;
FIG. 3 is an exploded view of the filter screen rail module for an embodiment of the present invention; and
FIG. 4 is schematic structural view of a cleaning member for an embodiment of the present invention.

Description of reference numerals:

| Label | Name | Label | Name |
|---|---|---|---|
| 100 | Cleaning member | 1102 | Second rail |
| 110 | Filter screen rail module | 1103 | Mounting space |
| 111 | First grille | 120 | Cleaning module |
| 112 | Second grille | 130 | Filter screen |
| 113 | Intermediate grille | 140 | Detecting device |
| 1101 | First rail | | |

The realization of the objective, functional characteristics, and advantages of the present invention are further described with reference to the accompanying drawings.

### DETAILED DESCRIPTION OF THE EMBODIMENTS

The technical solutions of the embodiments of the present invention will be clearly and completely described in the following with reference to the accompanying drawings.

It is to be understood that, all of the directional instructions in the embodiments of the present invention (such as top, bottom, left, right, front, rear...) can only be used for explaining relative position relations, moving condition of the elements under a special form (referring to figures), and so on, if the special form changes, the directional instructions changes accordingly.

In the present disclosure, unless otherwise expressly stated and limited, the terms "connected", "fixed", etc. should be understood broadly. For example, "fixed" may be a fixed connection, or may be a detachable connection, or integrated; may be a mechanical connection or an electrical connection; may be directly connected or indirectly connected through an intermediate medium, and may be internal communication of two elements or an interaction relationship of two elements, unless explicitly defined otherwise. For those skilled in the art, the specific meanings of the above terms of the present invention can be understood according to the specific conditions.

In addition, the descriptions, such as the "first", the "second" in the embodiments of present invention, can only be used for describing the aim of description, and cannot be understood as indicating or suggesting relative importance or impliedly indicating the number of the indicated technical character. Therefore, the character indicated by the "first", the "second" can express or impliedly include at least one character. As those skilled in the art will appreciate, aspects of the technical solution of each embodiment may be combined with each other.

The present invention provides an indoor unit according to claim 1.

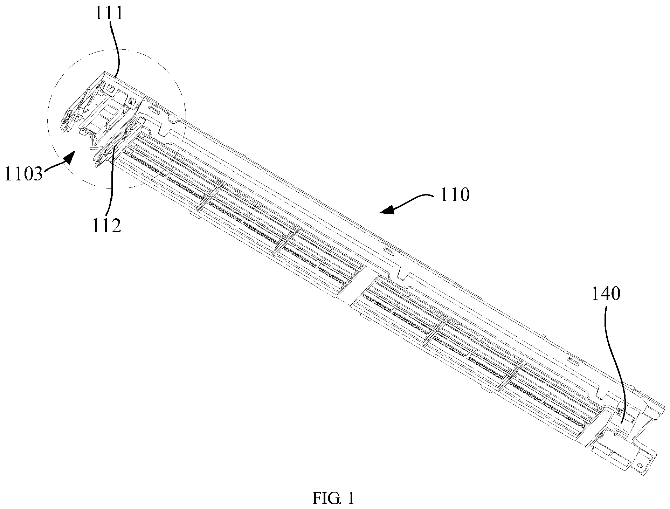

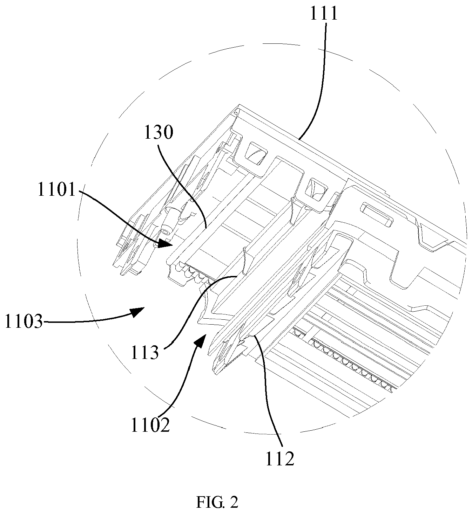

In an embodiment of the present invention, an indoor unit according to claim 1 is provided, and as shown in FIG. 1 and FIG. 2, the filter screen rail module 110 is in the indoor unit of an air conditioner. The indoor unit of the air conditioner includes a face frame (not shown) defining an air inlet. The filter screen rail module 110 is disposed adjacent to the air inlet, the filter screen rail module 110 is separable from the face frame, and the filter screen rail module 110 is provided with a rail (1101 and 1102) in which the filter screen 130 moves.

It is appreciated that, in the current technology, the filter screen rail module 110 is a structure in which the filter screen 130 moves, and needs to cooperate with the face frame to form a corresponding rail, and the filter screen 130 moves under the driving of the cleaning module 120. The air passing through the filter screen rail module 110 is filter screened by the filter screen 130 placed in the filter screen rail module 110 while the indoor unit of the air conditioner is in operation. However, in the present embodiment, the filter screen rail module 110 forms a rail (1101 and 1102, the rail is a space in which the filter screen moves), without the face frame, that is, the filter screen rail module 110 is a separate component that is separable from the face frame. Before the indoor unit of the air conditioner is assembled, the filter screen rail module 110 is combined with the cleaning module 120. Therefore, when the function of the filter screen 130 is tested, the problem of the movement of the filter screen 130 can be found in time, thereby avoiding that the function of the filter screen 130 can be detected after the indoor unit of the air conditioner is assembled.

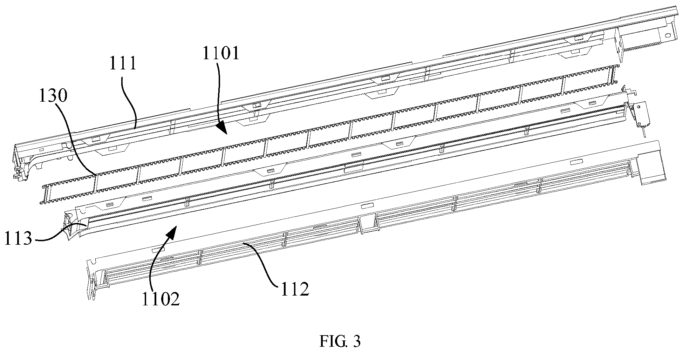

Specially, as shown in FIGS. 1 to 3, the rail includes a first rail 1101 and a second rail 1102;
the filter screen rail module 110 includes:
a first grille 111 and a second grille 112 spaced apart from the first grille 111; and
an intermediate grille 113 disposed between the first grille 111 and the second grille 112, the first rail 1101 is defined between the first grille 111 and the intermediate grille 113, the second rail 1102 is defined between the second grille 112 and the intermediate grille 113, the first rail 1101 is in communication with the second rail 1102, and the filter screen 130 is movable in the first rail 1101 and the second rail 1102.

In the present embodiment, the first grille 111, the intermediate grille 113 and the second grille 112 are cooperated to form the first rail 1101 and the second rail 1102 that are in communication with each other. The filter screen 130 is moveable in the first rail 1101 and the second rail 1102, and can reciprocate between the first rail 1101 and the second rail 1102. For example, the filter screen 130 slides out of the first rail 1101 into the second rail 1102, or slides out of the second rail 1102 into the first rail 1101. For another example, the filter screen 130 circulates between the first rail 1101 and the second rail 1102.

For example, the cleaning module 120 has a driving mechanism for driving the movement of the filter screen 130, a cleaning mechanism for cleaning the filter screen, a water pump, a water chamber, and the like. The water pump draws the condensed water generated by the indoor unit of the air conditioner into the water chamber, the driving mechanism drives the filter screen to move, and the cleaning mechanism cleans the filter screen. When the indoor unit of the air conditioner is in operation, the air passes through the filter screen rail module 110 to contact the heat exchanger to exchange heat. The filter screen 130 is located within the first rail 1101 or the second rail 1102 of the filter screen rail module 110 such that the filter screen 130 filter screens the air. After the filter screen 130 is dirty, the cleaning module 120 drives the filter screen 130 to move and clean the filter screen.

In the present embodiment, the filter screen rail module 110 is separated for connecting with the cleaning module 120. As such, it is not necessary to form a rail in which the filter screen 130 moves with cooperating with the face frame, so that the function of the filter screen 130 can be detected before the indoor unit of the air conditioner is assembled.

First, the intermediate grille 113 is connected to the second grille 112, and the second rail 1102 is defined between the intermediate grille 113 and the second grille 112, then, the first grille 111 is connected to the intermediate grille 113, and the first rail 1101 is defined between the first grille 111 and the intermediate grille 113. As such, the filter screen rail module 110 is assembled, and one end of the first rail 1101 is in communication with one end of the second rail 1102 to form a space for the filter screen 130 to move, and the filter screen 130 is placed in the first rail 1101. The filter screen rail module 110 is combined with the cleaning module 120. The first rail 1101 and the second rail 1102 are in communication with the water chamber of the cleaning module 120. The driving mechanism of the cleaning module 120 drives the filter screen 130 to move in the first rail 1101 and the second rail 1102. The cleaning mechanism of the cleaning module 120 cleans the filter screen 130 while the filter screen 130 is driven to move. As can be seen, the filter screen rail module 110 is a separate component, and the filter screen rail module 110 and the cleaning module 120 are combined into a cleaning member 100. The cleaning member 100 is a separate functional member so that the function of the filter screen 130 can be detected before assembling the indoor unit of the air conditioner.

For another example, first, the intermediate grille 113 is connected to the first grille 111, and the first rail 1101 is defined between the intermediate grille 113 and the first grille 111, then, the second grille 112 is connected to the first grille 111, and the second rail 1102 is defined between the second grille 112 and the intermediate grille 113. As such, the filter screen rail module 110 is assembled, and one end of the first rail 1101 is in communication with one end of the second rail 1102 to form a space for the filter screen 130 to move, and the filter screen 130 is placed in the first rail 1101. The assembly method is similar to the previous assembly method, but in the assembly method, the second grille 112 and the intermediate grille 113 are assembled by using the first grille 111 as a positioning reference, such that the positional deviation between the first rail 1101 and the second rail 1102 can be minimized, and the smooth movement of the filter screen 130 can be ensured.

Specially, as shown in FIG. 1 and FIG. 2, a mounting space 1103 for accommodating a cleaning module 120 is defined by the first grille 111, the second grille 112 and the intermediate grille 113 cooperatively. The first rail 1101 is in communication with the second rail 1102 through the mounting space 1103, and the cleaning module 120 is configured to drive the filter screen 130 to move in the first rail 1101 and the second rail 1102 to clean the filter screen 130.

Further, as shown in FIG. 1 and FIG. 2, an end of the first grille 111 is outwardly protruded with respect to an end of the intermediate grille 113 and an end of the second grille 112, and the mounting space 1103 is defined by the end of the first grille 111, the end of the intermediate grille 113, and the end of the second grille 112 cooperatively.

In the present invention, as shown in FIG. 2, the first grille 111, the second grille 112 and the intermediate grille 113 are disposed in a superposed manner, and one end of the first grille 111 is protruded. Thus, one end of the first grille 111, one end of the intermediate grille 113 and one end of the second grille 112 together form a mounting space 1103, thereby the mounting space 1103 is defined at one end of the entire filter screen rail module 110 so as to be combined with the cleaning module 120 for saving the internal space of the indoor unit of the air conditioner. The first rail 1101 communicates with the mounting space 1103, and the second rail 1102 communicates with the mounting space 1103. When the driving structure of the cleaning module 120 drives the filter screen 130, the filter screen 130 enters the mounting space 1103, is then cleaned, and then enters the second rail 1102. When the filter screen 130 is driven in the reverse direction, the filter screen 130 enters the mounting space 1103 from the second rail 1102. At this time, the filter screen 130 may or may not be cleaned, and then enter the first rail 1101.

In an embodiment of the present invention, the first grille 111 is detachably connected to the second grille 112. In the present embodiment, the detachable connection is a connection manner that can be both fixed and detached by the cooperation of the corresponding structure, such as a screw connection, a key connection, a snap connection, etc., which is not limited in this embodiment. When the filter screen rail module 110 is mounted in the indoor unit of the air conditioner, the air needs to pass through the entire filter screen rail module 110 to exchange heat with the heat exchanger. Therefore, except that the filter screen 130 may be dirty due to the dust accumulated on the filter screen 130, the first grille 111 and the second grille 112 may also become dirty. Thus, in the present embodiment, the first grille 111 is detachably connected to the second grille 112, so that it can be fixed and can be disassembled for easy cleaning.

In the present embodiment, the first grille 111 is detachably connected to the second grille 112, then, the intermediate grille 113 can be connected to the first grille 111 or the second grille 112, or the first grille 111 and the second grille 112 can jointly form a clamping limit for the intermediate grille 113 when connected.

Specially, the first grille 111 is snap-connected to the second grille 112. In the present embodiment, the snap connection is a type of detachable connection, which is a connection manner in which two parts are embedded or integrally latched. The specific manner of the snap connection is various, for example, the cooperation of the hook and the groove, the cooperation of the claw and the edge, etc., which are not limited in this embodiment. Compared with a threaded connection, the snap connection does not require a screwing operation and the connection of the components is easier.

In another embodiment, the first grille 111 is connected to the second grille 112 through at least one connection selected from a screw-slot connection, a magnetic connection, or a sliding connection.

In an embodiment of the present invention, the intermediate grille 113 is detachably connected to the first grille 111 and/or the second grille 112. As described above, the first grille 111 and the second grille 112 are easily dirty, and the intermediate grille 113 is also easily dirty. To facilitate the cleaning of the intermediate grille 113, the intermediate grille 133 is provided as a detachable connection.

For example, the intermediate grille 113 is detachably connected to the first grille 111. Firstly, the intermediate grille 113 is detachably connected to the first grille 111 to be positioned on the first grille 111, and then the second grille 112 is connected to the first grille 111.

For another example, the intermediate grille 113 is detachably connected to the second grille 112. Firstly, the intermediate grille 113 is detachably connected to the second grille 112 to be positioned on the second grille 112, and then the first grille 111 is connected to the second grille 112.

For another example, the intermediate grille 113 is detachably connected to the first grille 111 and the second grille 112. Firstly, the first grille 111 is connected to the second grille 112, and then the intermediate grille 113 is inserted between the first grille 111 and the second grille 112.

Specially, the intermediate grille 113 is snap-connected to the first grille 111 and/or the second grille 112. In the present embodiment, the snap connection is a type of detachable connection, which is a connection manner in which two parts are embedded or integrally latched. The specific manner of the snap connection is various, for example, the cooperation of the hook and the groove, the cooperation of the claw and the edge, etc., which are not limited in this embodiment. Compared with a threaded connection, the snap connection does not require a screwing operation and the connection of the components is easier.

In another embodiment, the intermediate grille 113 is connected to the first grille 111 and/or the second grille 112 through a screw-slot connection, a magnetic connection, or a sliding connection.

In the indoor unit of the present invention, there is a cleaning member 100, the cleaning member 100 including a filter screen rail module 110 as described above.

The filter screen rail module 110 is in the indoor unit of the invention defined in claim 1. The indoor unit of the air conditioner includes a face frame (not shown) defining an air inlet. The filter screen rail module 110 is disposed adjacent to the air inlet, the filter screen rail module 110 is separable from the face frame, and the filter screen rail module 110 is provided with a rail in which the filter screen 130 moves.

The specific structure of the filter screen rail module 110 of the present embodiment refers to the above embodiments. Since the structure of the filter screen rail module 110 of the cleaning member 100 adopts the technical solution of the above embodiments, at least the beneficial effects brought by the technical solutions of the foregoing embodiments are not repeatedly described herein.

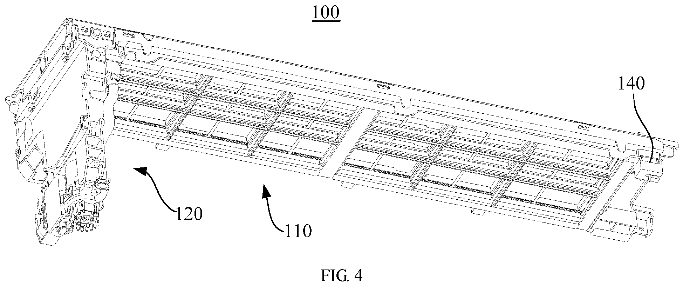

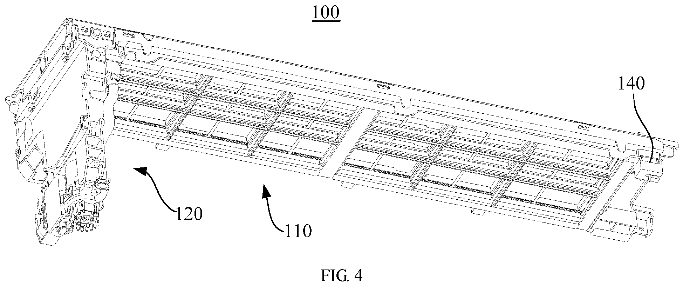

In an embodiment of the present invention, as shown in FIG. 4, the cleaning member 100 includes:
a filter screen 130 disposed on the rail; and
a cleaning module 120, the cleaning module 120 is mounted on the filter screen rail module 110, the filter screen 130 is connected to the cleaning module 120, and the cleaning module 120 is configured to drive the filter screen 130 to move in the rail for cleaning the filter screen 130.

In the present embodiment, the filter screen 130 is a component for filter screening the air. Referring to the current technology, the filter screen 130 is disposed on the rail. The filter screen 130 is disposed on the first rail 1101 or the second rail 1102. One end of the filter screen 130 is drivingly connected to a corresponding component in the cleaning module 120. The cleaning module 120 drives the filter screen 130 to slide out of the first rail 1101 into the second rail 1102, or slide out the second rail 1102 into the first rail 1101. For another example, the filter screen 130 is placed in the first rail 1101 and the second rail 1102, and the cyclic drive is implemented in the first rail 1101 and the second rail 1102 under the driving of the cleaning module 120.

In an embodiment of the present invention, as shown in FIG. 4, the cleaning member further includes a detecting device 140. The detecting device 140 is disposed on the filter screen rail module 110 for detecting a motion state of the filter screen 130. In the present embodiment, the detecting device 140 is disposed on the filter screen rail module 110. For example, the detecting device 140 is fixed to the first grille 111, or fixed to the second grille 112, or fixed to the third grille 113. The purpose of the detecting device 140 is to detect whether the filter screen 130 can move within the filter screen rail module 110, and the specific mounting position can be set according to actual needs. As such, by providing the detecting device 140, when the cleaning member 100 and other components are assembled into the indoor unit of the air conditioner, it is not necessary to provide detecting device on other components to detect the movement of the filter screen 130.

Further, the detecting device 140 is a micro switch, the cleaning module 120 is mounted at one end of the filter screen rail module 110, and the micro switch is mounted at another end of the filter screen rail module 110. The filter screen 130 is configured to trigger the micro switch in response to a determination that the filter screen 130 is in contact with the micro switch. In the present embodiment, for example, the micro switch is disposed in the first rail 1101 and the second rail 1102 so as to be in contact with the filter screen 130. The filter screen 130 contacts the micro switch, and the micro switch generates a signal, and the electronic control module of the indoor unit of the air conditioner can determine whether the filter screen 130 can move normally according to the signal.

The present invention provides an indoor unit of an air conditioner as described above.

Since the structure of the cleaning member 100 adopts the technical solution of the above embodiments, at least the beneficial effects brought by the technical solutions of the foregoing embodiments are not repeatedly described herein.

In an embodiment of the present invention, the indoor unit of the air conditioner includes the features of claim 1. In particular, it includes:
a chassis (not shown), the cleaning member 100 is mounted on the chassis; and
a face frame (not shown) mounted on the chassis, the face frame is defined with an air inlet, the filter screen rail module 110 is disposed adjacent to the air inlet, and the filter screen rail module 110 is separable from the face frame.

In the present embodiment, the cleaning member 100 is a separate functional component that does not have to cooperate with the face frame to form a rail in which the filter screen 130 moves. Therefore, the function of the filter screen 130 can be detected offline, and the normally working cleaning member 100 can be directly mounted on the chassis without cooperating with the face frame, thereby greatly improving the production efficiency.

## Claims

1. An indoor unit of an air conditioner, comprising a cleaning member (100), and a face frame defining an air inlet, the cleaning member (100) comprising a filter screen rail module (110), **characterized in that**:
the filter screen rail module (110) is disposed adjacent to the air inlet, and is separable from the face frame, and the filter screen rail module (110) comprises a rail in which the filter screen (130) can move,
wherein the cleaning member (100) further comprising:
a filter screen (130) disposed on the rail; and
a cleaning module (120) mounted on the filter screen rail module (110),
wherein the filter screen (130) is connected to the cleaning module (120), and the cleaning module (120) is configured to drive the filter screen (130) to move in the rail for cleaning the filter screen (130);
wherein the rail comprises a first rail (1101) and a second rail (1102) communicating with the first rail (1101), and
wherein the filter screen rail module (110) comprises:
a first grille (111);
a second grille (112) spaced apart from the first grille (111); and
an intermediate grille (113) disposed between the first grille (111) and the second grille (112),
wherein the first rail (1101) is defined between the first grille (111) and the intermediate grille (113), the second rail (1102) is defined between the second grille (112) and the intermediate grille (113), and the filter screen (130) is movable in the first rail (1101) and the second rail (1102);
wherein the filter screen rail module (110) further comprises:
a mounting space (1103) for accommodating the cleaning module (120),
wherein the first rail (1101) is in communication with the second rail (1102) through the mounting space (1103), and
wherein the cleaning module (120) is configured to drive the filter screen (130) to move in the first rail (1101) and the second rail (1102) to clean the filter screen (130);
**characterized in that**
the mounting space (1103) is defined by the first grille (111), the second grille (112) and the intermediate grille (113) cooperatively,
wherein an end of the first grille (111) is outwardly protruded with respect to an end of the intermediate grille (113) and an end of the second grille (112), and
wherein the mounting space (1103) is defined by the end of the first grille (111), the end of the intermediate grille (113), and the end of the second grille (112) cooperatively.

2. The indoor unit of an air conditioner according claim 1,
wherein the first grille (111) is detachably connected to the second grille (112).

3. The indoor unit of an air conditioner according to claim 2,
wherein the first grille (111) is connected to the second grille (112) through at least one connection selected from a snap connection, a screw-slot connection, a magnetic connection, or a sliding connection.

4. The indoor unit of an air conditioner according to claim 1,
wherein the intermediate grille (113) is detachably connected to the first grille (111) and/or the second grille (112).

5. The indoor unit of an air conditioner according to claim 4,
wherein the intermediate grille (113) is connected to the first grille (111) and the second grille (112) through at least one connection selected from a snap connection, a screw-slot connection, a magnetic connection, or a sliding connection.

6. The indoor unit of an air conditioner according to claim 1, the cleaning member (100) further comprising:
a detecting device (140) disposed on the filter screen rail module (110) for detecting a motion state of the filter screen (130).

7. The indoor unit of an air conditioner according to claim 6,
wherein the detecting device (140) is a micro switch, the cleaning module (120) is mounted at one end of the filter screen rail module (110), and the micro switch is mounted at another end of the filter screen rail module (110), and
wherein the filter screen (130) is configured to trigger the micro switch in response to a determination that the filter screen (130) is in contact with the micro switch.

8. The indoor unit of the air conditioner according to any one of claims 1 to 7, further comprising:
a chassis, wherein the cleaning member (100) is mounted on the chassis; and
the face frame mounted on the chassis.

9. An air conditioner, comprising an outdoor unit and an indoor unit as recited in any one of claims 1 to 8.

## Patentansprüche

1. Inneneinheit einer Klimaanlage, umfassend ein Reinigungselement (100) und einen Frontrahmen, der einen Lufteinlass definiert, wobei das Reinigungselement (100) ein Filtersiebschienenmodul (110) umfasst, **dadurch gekennzeichnet, dass**:
das Filtersiebschienenmodul (110) dem Lufteinlass benachbart angeordnet und von dem Frontrahmen trennbar ist und das Filtersiebschienenmodul (110) eine Schiene umfasst, in der sich das Filtersieb (130) bewegen kann,
wobei das Reinigungselement (100) ferner Folgendes umfasst:
ein Filtersieb (130), das auf der Schiene angeordnet ist; und
ein Reinigungsmodul (120), das an dem Filtersiebschienenmodul (110) angebracht ist,
wobei das Filtersieb (130) mit dem Reinigungsmodul (120) verbunden ist und das Reinigungsmodul (120) dazu konfiguriert ist, das Filtersieb (130) anzutreiben, um sich zum Reinigen des Filtersiebs (130) in der Schiene zu bewegen;
wobei die Schiene eine erste Schiene (1101) und eine zweite Schiene (1102), die mit der ersten Schiene (1101) in Verbindung steht, umfasst und
wobei das Filtersiebschienenmodul (110) Folgendes umfasst:
ein erstes Gitter (111);
ein zweites Gitter (112), das von dem ersten Gitter (111) beabstandet ist; und
ein mittleres Gitter (113), das zwischen dem ersten Gitter (111) und dem zweiten Gitter (112) angeordnet ist,
wobei die erste Schiene (1101) zwischen dem ersten Gitter (111) und dem mittleren Gitter (113) definiert ist, die zweite Schiene (1102) zwischen dem zweiten Gitter (112) und dem mittleren Gitter (113) definiert ist und das Filtersieb (130) in der ersten Schiene (1101) und der zweiten Schiene (1102) bewegbar ist;
wobei das Filtersiebschienenmodul (110) ferner Folgendes umfasst:
einen Einbauraum (1103) zum Aufnehmen des Reinigungsmoduls (120),
wobei die erste Schiene (1101) über den Einbauraum (1103) mit der zweiten Schiene (1102) in Verbindung steht und
wobei das Reinigungsmodul (120) dazu konfiguriert ist, das Filtersieb (130) anzutreiben, um sich in der ersten Schiene (1101) und der zweiten Schiene (1102) zu bewegen, um das Filtersieb (130) zu reinigen;
**dadurch gekennzeichnet, dass**
der Einbauraum (1103) von dem ersten Gitter (111), dem zweiten Gitter (112) und dem mittleren Gitter (113) zusammenwirkend definiert wird,
wobei ein Ende des ersten Gitters (111) in Bezug auf ein Ende des mittleren Gitters (113) und ein Ende des zweiten Gitters (112) nach außen vorsteht und
wobei der Einbauraum (1103) von dem Ende des ersten Gitters (111), dem Ende des mittleren Gitters (113) und dem Ende des zweiten Gitters (112) zusammenwirkend definiert wird.

2. Inneneinheit einer Klimaanlage nach Anspruch 1,
wobei das erste Gitter (111) lösbar mit dem zweiten Gitter (112) verbunden ist.

3. Inneneinheit einer Klimaanlage nach Anspruch 2,
wobei das erste Gitter (111) über mindestens eine Verbindung mit dem zweiten Gitter (112) verbunden ist, die aus einer Schnappverbindung, einer Schrauben-Loch-Verbindung, einer Magnetverbindung oder einer Schiebeverbindung ausgewählt ist.

4. Inneneinheit einer Klimaanlage nach Anspruch 1,
wobei das mittlere Gitter (113) lösbar mit dem ersten Gitter (111) und/oder dem zweiten Gitter (112) verbunden ist.

5. Inneneinheit einer Klimaanlage nach Anspruch 4,
wobei das mittlere Gitter (113) über mindestens eine Verbindung mit dem ersten Gitter (111) und dem zweiten Gitter (112) verbunden ist, die aus einer Schnappverbindung, einer Schrauben-Loch-Verbindung, einer Magnetverbindung oder einer Schiebeverbindung ausgewählt ist.

6. Inneneinheit einer Klimaanlage nach Anspruch 1, wobei das Reinigungselement (100) ferner Folgendes umfasst:
eine Erfassungsvorrichtung (140), die an dem Filtersiebschienenmodul (110) angeordnet ist, zum Erfassen eines Bewegungszustands des Filtersiebs (130).

7. Inneneinheit einer Klimaanlage nach Anspruch 6,
wobei die Erfassungsvorrichtung (140) ein Mikroschalter ist, das Reinigungsmodul (120) an einem Ende des Filtersiebschienenmoduls (110) angebracht ist und der Mikroschalter an einem anderen Ende des Filtersiebschienenmoduls (110) angebracht ist und
wobei das Filtersieb (130) dazu konfiguriert ist, den Mikroschalter als Reaktion auf eine Bestimmung auszulösen, dass sich das Filtersieb (130) mit dem Mikroschalter in Kontakt befindet.

8. Inneneinheit der Klimaanlage nach einem der Ansprüche 1 bis 7, ferner umfassend ein Chassis, wobei das Reinigungselement (100) an dem Chassis angebracht ist; und der Frontrahmen an dem Chassis angebracht ist.

9. Klimaanlage, umfassend eine Außeneinheit und die Inneneinheit nach einem der Ansprüche 1 bis 8.

## Revendications

1. Unité intérieure d'un climatiseur, comportant un élément de nettoyage (100) et un cadre frontal définissant une entrée d'air, l'élément de nettoyage (100) comportant un module formant rail à tamis filtrant (110), **caractérisée en ce que** :
le module formant rail à tamis filtrant (110) est disposé de manière adjacente par rapport à l'entrée d'air et est en mesure d'être séparé du cadre frontal, et le module formant rail à tamis filtrant (110) comporte un rail dans lequel le tamis filtrant (130) peut se déplacer,
dans laquelle l'élément de nettoyage (100) comporte par ailleurs :
un tamis filtrant (130) disposé sur le rail ; et
un module de nettoyage (120) monté sur le module formant rail à tamis filtrant (110),
dans laquelle le tamis filtrant (130) est relié au module de nettoyage (120), et le module de nettoyage (120) est configuré pour entraîner le tamis filtrant (130) à se déplacer dans le rail pour nettoyer le tamis filtrant (130) ;
dans laquelle le rail comporte un premier rail (1101) et un deuxième rail (1102) en communication avec le premier rail (1101), et
dans laquelle le module formant rail à tamis filtrant (110) comporte :
une première grille (111) ;
une deuxième grille (112) espacée de la première grille (111) ; et
une grille intermédiaire (113) disposée entre la première grille (111) et la deuxième grille (112),
dans laquelle le premier rail (1101) est défini entre la première grille (111) et la grille intermédiaire (113), le deuxième rail (1102) est défini entre la deuxième grille (112) et la grille intermédiaire (113), et le tamis filtrant (130) est mobile dans le premier rail (1101) et le deuxième rail (1102) ;
dans laquelle le module formant rail à tamis filtrant (110) comporte par ailleurs :
un espace de montage (1103) servant à recevoir le module de nettoyage (120),
dans laquelle le premier rail (1101) est en communication avec le deuxième rail (1102) par le biais de l'espace de montage (1103), et
dans laquelle le module de nettoyage (120) est configuré pour entraîner le tamis filtrant (130) à se déplacer dans le premier rail (1101) et le deuxième rail (1102) pour nettoyer le tamis filtrant (130) ;
**caractérisée en ce que**
l'espace de montage (1103) est défini par la première grille (111), la deuxième grille (112) et la grille intermédiaire (113) de manière coopérative,
dans laquelle une extrémité de la première grille (111) fait saillie vers l'extérieur par rapport à une extrémité de la grille intermédiaire (113) et par rapport à une extrémité de la deuxième grille (112), et
dans laquelle l'espace de montage (1103) est défini par l'extrémité de la première grille (111), l'extrémité de la grille intermédiaire (113) et l'extrémité de la deuxième grille (112) de manière coopérative.

2. Unité intérieure d'un climatiseur selon la revendication 1,
dans laquelle la première grille (111) est reliée de manière détachable à la deuxième grille (112).

3. Unité intérieure d'un climatiseur selon la revendication 2,
dans laquelle la première grille (111) est reliée à la deuxième grille (112) par au moins un raccord sélectionné parmi un raccord à encliquetage, un raccord à vis et à fente, un raccord magnétique ou un raccord coulissant.

4. Unité intérieure d'un climatiseur selon la revendication 1,
dans laquelle la grille intermédiaire (113) est reliée de manière détachable à la première grille (111) et/ou à la deuxième grille (112).

5. Unité intérieure d'un climatiseur selon la revendication 4,
dans laquelle la grille intermédiaire (113) est reliée à la première grille (111) et à la deuxième grille (112) par le biais d'au moins un raccord sélectionné parmi un raccord à encliquetage, un raccord à vis et à fente, un raccord magnétique ou un raccord coulissant.

6. Unité intérieure d'un climatiseur selon la revendication 1, l'élément de nettoyage (100) comportant par ailleurs :
un dispositif de détection (140) disposé sur le module formant rail à tamis filtrant (110) servant à détecter un état de mouvement du tamis filtrant (130).

7. Unité intérieure d'un climatiseur selon la revendication 6,
dans laquelle le dispositif de détection (140) est un microrupteur, le module de nettoyage (120) est monté au niveau d'une extrémité du module formant rail à tamis filtrant (110), et le microrupteur est monté au niveau d'une autre extrémité du module formant rail à tamis filtrant (110), et
dans laquelle le tamis filtrant (130) est configuré pour déclencher le microrupteur en réponse à une détermination comme quoi le tamis filtrant (130) est en contact avec le microrupteur.

8. Unité intérieure du climatiseur selon l'une quelconque des revendications 1 à 7, comportant par ailleurs :
un châssis, dans lequel l'élément de nettoyage (100) est monté sur le châssis ; et
le cadre frontal monté sur le châssis.

9. Climatiseur, comportant une unité extérieure et une unité intérieure selon l'une quelconque des revendications 1 à 8.
